# EUROPEAN PATENT SPECIFICATION

(11) **EP 2 398 176 B1**
(45) Date of publication and mention of the grant of the patent: **15.05.2013**
(21) Application number: 10360026.8
(22) Date of filing: 18.06.2010
(51) Int. Cl.: H04L 1/00, H04W 72/04

(54) **Multi carrier network configuration**
Mehrträgernetzkonfigurationen
Configuration de réseau à multi-porteuses

(43) Date of publication of application: 21.12.2011
(73) Proprietor: Alcatel Lucent, 75007 Paris (FR)
(72) Inventor: Wong, Shin Horng, Chippenham, Wiltshire SN14 0SP (GB)
(74) Representative: Sarup, David Alexander

(56) References cited:
- WO-A1-2008/020738
- WO-A1-2009/155861
- WO-A1-2009/157849
- WO-A1-2010/091544
- US-A1- 2004 058 687
- US-A1- 2006 274 712

## Description

### FIELD OF THE INVENTION

The present invention relates to a method of acknowledging receipt of a control message instructing a change in carrier configuration in a multi-carrier wireless telecommunications network, a network node, base station, and user equipment operable to carry out that method, and a computer program product.

### BACKGROUND

Single carrier wireless telecommunications systems are known. In those systems, radio coverage is provided to user equipment, for example, mobile telephones, by geographical area. A base station is located in each geographical area to provide required radio coverage. User equipment in an area served by a base station receives information and data from a base station and transmits information and data to a base station.

Information and data transmitted by a base station to user equipment occurs on channels of radio carriers known as "downlink carriers". Information and data transmitted by user equipment to a base station occurs on uplink data channels of radio carriers known as "uplink carriers".

An area served by a base station typically comprises several sectors which together define a coverage area for that base station. Typically, a base station serves three sectors. Those sectors are typically served by separate antenna arrays provided on a base station.

It is possible to allow base stations and user equipment to each transmit simultaneously on more than one carrier. Furthermore, it is possible to allow user equipment and base stations to receive simultaneously on more than one carrier frequency.

In such a scenario, each carrier, both uplink and downlink, is individually and independently power controlled.

Dual Cell High Speed Uplink Packet Access (DC-HSUPA) will allow user equipment to transmit (uplink) data on two adjacent frequency carriers. This allows for an increase in data throughput from user equipment relative to a single carrier arrangement. In 4 Carrier High Speed Downlink Packet Access (4C-HSDPA) user equipment can receive (and a base station can transmit on) up to four simultaneous downlink carriers from a base station.

In 4C-HSDPA, a sector is defined as the geographical coverage area of a base station (also known as a Node B). A sector can consist of several cells, where each cell aims to cover the same geographical coverage as the sector and uses a separate frequency carrier for its transmission. Each carrier can be within the same frequency band, or region of radio spectrum, or distributed over two frequency bands provided in the radio spectrum.

4C-HSDPA is an extension to Dual Cell High Speed Downlink Packet Access (DC-HSDPA). It should be understood that 4C-HSDPA can potentially double and quadruple the downlink throughput of DC-HSDPA and single cell HSDPA respectively. 4C-HSDPA may also be referred to as MC-HSDPA (Multi Carrier HSDPA) or 3C-HSDPA when a base station transmits (or a user equipment receives) simultaneous transmissions from four or more or three cells respectively.

Multi-carrier systems allow for an increase in data throughput from user equipment and from a base station. The term "multi carrier network" used herein is envisaged to cover both DC-HSDPA, 3C-HSDPA, 4C-HSDPA and MC-HSDPA networks.

In a typical multi carrier wireless telecommunications network, one of the downlink carriers provided will typically be known as an "anchor" or "primary" carrier. The anchor carrier has a particular functional purpose and whilst user equipment and base stations may be able to receive and transmit on one or more carrier simultaneously, the anchor uplink and downlink carriers are the carriers upon which a base station monitors, controls and instructs various functional aspects of a relationship between user equipment and a base station including, for example, mobility events. That is to say, an anchor carrier provides essential control channels for downlink and uplink operation and mobility events are managed based upon measurements made by user equipment and reported by messages in the uplink.

In a multi-carrier system, there will typically be provided one "primary" carrier and one or more "secondary" carriers. The secondary carriers are indexed as: secondary carrier 1, secondary carrier 2, secondary carrier 3, etc. Since the primary carrier contains essential control channels, it cannot be deactivated without affecting operation of the wireless telecommunication network and, in particular, operation of the user equipment. The primary carrier is therefore typically not deactivated.

One or more of the secondary carriers can, however, be deactivated without loss of functionality. A base station may choose to deactivate a carrier if it is experiencing particularly poor radio condition. Downlink carriers may be deactivated or activated by a base station using a High Speed Shared Control Channel (HS-SCCH) Order. User equipment acts to return feedback that the order has been received. That feedback is sent by user equipment using a High Speed Dedicated Physical Control Channel (HS-DPCCH), a feedback channel provided on the primary uplink carrier.

The HS-DPCCH channel is also used to send information regarding the downlink carrier radio conditions experienced by the user equipment. That information is included in a single message which also includes feedback relating to an HS-SCCH order, if received. In particular, the message sent by User Equipment on that channel relating to radio conditions being experienced includes information relating to the channel quality, also known as the Channel Quality Indicator (CQI) (for which 1= bad; 30=best) and a PreCoding Control Indication (PCI), if appropriate.

If a base station fails to receive feedback or incorrectly interprets feedback that user equipment has received an order to deactivate (or reactivate) one or more secondary downlink carriers when the order has not been received by user equipment, it reconfigures downlink carrier transmission. As a result, information sent relating to downlink carrier radio condition on an HS-DPCCH channel from the user equipment to a base station subsequent to any reconfiguration may be misinterpreted by a base station, thus leading to inefficiency and reduced functionality in the wireless communications network.

US 2006/0274712A (Qualcomm), WO 2009/157849 (Ericsson), WO 2008/020738 (Samsung), WO 2009/155861 (Huawei), US 2004/0058687 (Samsung) and WO 2010/0915544 (Huawei) disclose various ways of implementing control methods in multicarrier systems.

Accordingly, it is desired to improve the resilience of the reconfiguration process in a multi-carrier wireless telecommunication network.

### SUMMARY

Accordingly, a first aspect provides a method of acknowledging receipt of a control message instructing a change in carrier configuration in a multi-carrier wireless telecommunication network, the multi-carrier wireless telecommunications network comprising a plurality of network nodes configured to simultaneously transmit and receive signals on more than one radio frequency carrier within a sector of the telecommunications network,
the method comprising the steps of:
receiving the control message,
encoding an acknowledgement of safe receipt of the control message,
transmitting the acknowledgement of safe receipt, and a predetermined period after the transmission of the acknowledgement of safe receipt, re-transmitting the acknowledgement of safe receipt.

Multi-carrier high speed downlink packet access networks typically consist of one primary carrier and a number of secondary carriers. Secondary carriers are indexed as secondary carrier 1, secondary carrier 2, and so forth. A primary downlink carrier contains essential control channels and cannot be deactivated. Secondary downlink carriers may be deactivated by a base station. As explained above, in order to deactivate one or more secondary carriers, a base station uses a High Speed Shared Control Channel (HS-SCCH) Order. User equipment acknowledges receipt of such an order using a feedback channel, known as a High Speed Dedicated Physical Control Channel (HS-DPCCH). That channel is also used by user equipment to send feedback information regarding the downlink radio conditions being experienced by that user equipment on each carrier. That information includes the CQI and PCI for each channel.

In a single carrier system, the HS-DPCCH typically uses a spreading factor of 256. In a multi-carrier network, for example a 4C-HSDPA, the HS-DPCCH may use a spreading factor of 128. Such a spreading factor operates to take the number of symbols or bits in the original signal and increase it by a factor of 128, thereby increasing the coding gain of the signal. That is to say, the signal is 128 times stronger, or requires 128 less signal to noise ratio to be correctly received.

The size of the feedback message, including feedback regarding whether a reconfiguration order has been received and radio condition being experienced by carriers, remains constant, irrespective of how many carriers are activated in the multi-carrier wireless telecommunications network. In other words, when only one carrier is activated, the entire message may be dedicated to feeding back information regarding that single carrier. If feedback information is required for two carriers, half of the message may be allocated to feeding back information relating to each of those carriers. As the number of carriers in a multi-carrier system increases, it will be understood that the portion of message allocated to each carrier is restricted. Furthermore, it will be understood that as the number of active carriers increases, the difference between messages indicating various statuses of radio condition and feedback diminishes. That is to say, the Hamming distance between different states or codewords reduces. If the protection offered to the feedback information is less, the likelihood of misinterpretation of that message increases. That is to say, the feedback message consists of acknowledgements (ACK/NACK/DTX) and CQI/PCI. 10 bits are used for the acknowledgements and a bit pattern (codeword) is used to represent a status. More possible statuses results in more codewords, and the differences between two codewords (ie number of bits that are different) becomes smaller, ie Hamming distance shrinks. This may lead to it being prone to error. The other portion of the feedback message, such as the CQI and PCI, typically uses additional bits for coding gain. In the case of CQI and PCI, the final product is typically 20 bits, so if a CQI is longer (to code the extra carrier) less padding is used. For example, in single carrier, CQI is, say, 5 bits, 15 bits may be used for padding. For two carriers, CQI is 10 bits, and 10 bits may be used for padding.

It will be appreciated that if a base station changes downlink carrier configuration and instructs that configuration change, it will modify its expectation regarding the format of the message which will be transmitted by user equipment encoding feedback information regarding the state of the various carriers. In particular, if a base station is operating using two downlink carriers, then activates two further carriers, the messages expected after the reconfiguration ought to relate to four carriers, not two. It will therefore be understood that if the user equipment does not receive the reconfiguration order, or receives the reconfiguration order yet does not successfully acknowledge receipt of that order to a base station, or that a message is interpreted as an acknowledgement when no reconfiguration order was received by user equipment, there is significant scope for a base station to misinterpret the feedback information being sent by user equipment.

The first aspect recognises that by sending an acknowledgement message to a base station, then waiting a predetermined period of time before automatically retransmitting that acknowledgement can increase the chance that the acknowledgement message is successfully received and correctly interpreted by the base station.

By repeating the message, rather than increasing power, the likelihood of interference is minimized. Although a repetition may take time which otherwise may be used for user data, if an acknowledgement of a reconfiguration order is successfully received, that short-term inefficiency is compensated for by improved overall network performance. A base station may be configured to expect the repetition of transmission.

In one embodiment, the method comprises the step of more than one retransmission. Accordingly, further repeating transmission of the acknowledgement may further increase the likelihood of successful receipt by a base station. The number of repetitions may be configured and agreed between user equipment and a base station in response to field testing in order to balance potential disruption to user data being sent by retransmitting the acknowledgement message with improved overall network performance.

In one embodiment, the method further comprises the steps of reconfiguring hardware in response to the instructed change in carrier configuration. Accordingly, the reconfiguration may be carried out directly in response to receipt of a reconfiguration order. Reconfiguration of hardware may, however, be delayed until after the retransmission of the acknowledgement occurs.

In one embodiment, the step of transmitting the acknowledgement of safe receipt occurs prior to the step of reconfiguring hardware and the step of re-transmitting said acknowledgement of safe receipt occurs after the step of reconfiguring hardware.

In one embodiment, the step of transmitting the acknowledgement of safe receipt, occurs prior to the step of reconfiguring hardware and the step of re-transmitting the acknowledgement of safe receipt occurs during the step of reconfiguring hardware. Accordingly, it will be understood that typically user equipment allows a reception reconfiguration period of, for example, 12 time slots. During this reconfiguration of reception apparatus, the user equipment may still retain full uplink (transmission) functionality. Depending on configuration, it will thus be understood that user equipment may send the retransmission of acknowledgement of safe receipt one or more times during hardware reconfiguration.

In one embodiment, the step of encoding an acknowledgement of safe receipt of the control message comprises encoding an acknowledgement of safe receipt comprising additional coding operable to reduce misinterpretation of the acknowledgement. Accordingly, rather than sending a message which includes a large proportion of information relating to the status of radio carriers, and in which the feedback confirming safe receipt of the reconfiguration order may be only a very small portion, a greater portion of message may be allocated to an acknowledgement of safe receipt of a reconfiguration order. It will be appreciated that in such an arrangement a base station may not receive radio condition feedback for all carriers, as might usually be expected in a feedback message of which the acknowledgement of safe receipt forms part. However, CQI information is not required for deactivated carriers after user equipment reconfiguration. A base station may stop sending data packets on deactivated carriers after a reconfiguration order is sent, and hence no longer needs CQI information in respect of those carriers.

In one embodiment, the additional coding comprises additional redundancy. Accordingly, the proportion of a feedback message allocated to the acknowledgement of safe receipt message may be increased. The larger message includes tolerance such that the message can be successfully decoded, even with a degree of corruption or errors.

In one embodiment, the additional coding comprises a check sum, or a cyclic redundancy check. A check sum may allow errors in an acknowledgement of safe receipt message to be detected. Accordingly, if an error is detected, a base station may await a repetition of that acknowledgement message.

In one embodiment, the acknowledgement of safe receipt comprises a message of predetermined length.

The message may comprise a predetermined (unique) codeword acting as a special acknowledgement that acknowledges ONLY receipt of a reconfiguration. In this respect, the message only acknowledges the order (one acknowledgement) thereby giving opportunity for more coding gain.

In one embodiment, the control message comprises an instruction to activate or deactivate one or more carriers in a multi-carrier wireless telecommunications network.

In one embodiment, the control message comprises an order to activate or deactivate reception of downlink carriers in a multi-carrier wireless telecommunications network. In one embodiment, the control message comprises an order to activate or deactivate transmission of uplink carriers in a multi-carrier wireless telecommunications network. Although primarily discussed in relation to downlink carrier activation and deactivation, it will be appreciated that the method disclosed herein has analogous application in an uplink carrier scenario.

In one embodiment, the acknowledgement of safe receipt is transmitted on an existing control channel associated with a carrier. In one embodiment, the encoding step comprises selection of a known codeword in response to receipt of the control message. Accordingly, the acknowledgement comprising additional coding may comprise a newly defined codeword in, for example, an HS-DPCCH, or a new physical channel. It may, however, be possible, in order to avoid having to redesign a new codeword or physical channel, to re-use existing codewords for the HS-DPCCH in an atypical context, such that they have a high likelihood of safe and accurate receipt at a base station.

A second aspect provides a computer program product configured, when executed on a computer, to perform the method of the first aspect.

A third aspect provides a network node configured to acknowledge receipt of a control message instructing a change in carrier configuration in a multi-carrier wireless telecommunication network, the multi-carrier wireless telecommunications network comprising a plurality of network nodes operable to simultaneously transmit and receive signals on more than one radio frequency carrier within a sector of the telecommunications network,
the network node comprising:
reception logic configured to receive the control message,
encoding logic configured to encode an acknowledgement of safe receipt of the control message, and
transmission logic configured to transmit the acknowledgement of safe receipt, and a predetermined period after the transmission of the acknowledgement of safe receipt, re-transmit the acknowledgement of safe receipt.

In one embodiment, said network node comprises user equipment. In one embodiment, said network node comprises a base station.

In one embodiment, said transmission logic is further operable to perform more than one repetition.

In one embodiment, the network node further comprises reconfiguration logic operable to reconfigure hardware in response to the instructed change in carrier configuration.

In one embodiment, the transmission logic is operable to perform the step of transmitting acknowledgement of safe receipt prior to said step of reconfiguring hardware and perform the step of re-transmitting said acknowledgement of safe receipt after the step of reconfiguring hardware.

In one embodiment, the transmission logic is operable to perform the step of transmitting said acknowledgement of safe receipt prior to the step of reconfiguring hardware and perform the step of re-transmitting the acknowledgement of safe receipt occurs during the step of reconfiguring hardware.

In one embodiment, the encoding logic is operable to encode an acknowledgement of safe receipt comprising additional coding operable to reduce misinterpretation of the acknowledgement.

In one embodiment, the additional coding comprises additional redundancy.

In one embodiment, the additional coding comprises a check sum.

In one embodiment, the acknowledgement of safe receipt comprises a message of predetermined length.

In one embodiment, the control message comprises an instruction to activate or deactivate one or more carriers in a multi-carrier wireless telecommunications network.

In one embodiment, the control message comprises an order to activate or deactivate reception of downlink carriers in a multi-carrier wireless telecommunications network.

In one embodiment, the transmission logic is operable to transmit the acknowledgement of safe receipt on an existing control channel associated with a carrier.

In one embodiment, the encoding logic is operable to select a known codeword in response to receipt of the control message.

An example provides a method of acknowledging receipt of a control message instructing a change in carrier configuration in a multi-carrier wireless telecommunication network, the multi-carrier wireless telecommunications network comprising a plurality of network nodes operable to simultaneously transmit and receive signals on more than one radio frequency carrier within a sector of the telecommunications network, the method comprising the steps of:
receiving the control message,
encoding an acknowledgement of safe receipt of the control message comprising additional coding operable to reduce misinterpretation of the acknowledgement; and
transmitting the encoded acknowledgement of safe receipt.

Accordingly, rather than sending a message which includes a large proportion of information relating to the status of radio carriers, and in which the feedback confirming safe receipt of the reconfiguration order may be only a very small portion, a greater portion of message may be allocated to an acknowledgement of safe receipt of a reconfiguration order. It will be appreciated that in such an arrangement a base station may not receive radio condition feedback for all carriers, as might usually be expected in a feedback message of which the acknowledgement of safe receipt forms part. However, CQI information is not required for deactivated carriers after user equipment reconfiguration. A base station may stop sending data packets on deactivated carriers after a reconfiguration order is sent, and hence no longer needs CQI information in respect of those carriers. It will be appreciated that the advantages offered by additional coding may reduce the requirement to repeat transmission of the acknowledgement of safe receipt.

In one embodiment, the additional coding comprises additional redundancy. Accordingly, the proportion of a feedback message allocated to the acknowledgement of safe receipt message may be increased. The larger message includes tolerance such that the message can be successfully decoded, even with a degree of corruption or errors.

In one embodiment, the additional coding comprises a check sum, or a cyclic redundancy check. A check sum may allow errors in an acknowledgement of safe receipt message to be detected. Accordingly, if an error is detected, a base station may await a repetition of that acknowledgement message.

In one embodiment, the acknowledgement of safe receipt comprises a message of predetermined length.

In one embodiment, the method further comprises the step of transmitting the acknowledgement of safe receipt, and a predetermined period after the transmission of the acknowledgement of safe receipt, re-transmitting the acknowledgement of safe receipt.

In one embodiment, the method comprises the step of more than one repetition. Accordingly, further repeating transmission of the acknowledgement may further increase the likelihood of successful receipt by a base station. The number of repetitions may be configured and agreed between user equipment and a base station in response to field testing in order to balance potential disruption to user data being sent by retransmitting the acknowledgement message with improved overall network performance.

In one embodiment, the method further comprises the steps of reconfiguring hardware in response to the instructed change in carrier configuration. Accordingly, the reconfiguration may be carried out directly in response to receipt of a reconfiguration order. Reconfiguration of hardware may, however, be delayed until after the retransmission of the acknowledgement occurs.

In one embodiment, the step of transmitting the acknowledgement of safe receipt occurs prior to the step of reconfiguring hardware and the step of re-transmitting said acknowledgement of safe receipt occurs after the step of reconfiguring hardware.

In one embodiment, the step of transmitting the acknowledgement of safe receipt, occurs prior to the step of reconfiguring hardware and the step of re-transmitting the acknowledgement of safe receipt occurs during the step of reconfiguring hardware. Accordingly, it will be understood that typically user equipment allows a reception reconfiguration period of, for example, 12 time slots. During this reconfiguration of reception apparatus, the user equipment may still retain full uplink (transmission) functionality. Depending on configuration, it will thus be understood that user equipment may send the retransmission of acknowledgement of safe receipt one or more times during hardware reconfiguration.

In one embodiment, the control message comprises an order to activate or deactivate reception of downlink carriers in a multi-carrier wireless telecommunications network. In one embodiment, the control message comprises an order to activate or deactivate transmission of uplink carriers in a multi-carrier wireless telecommunications network. Although primarily discussed in relation to downlink carrier activation and deactivation, it will be appreciated that the method disclosed herein has analogous application in an uplink carrier scenario.

In one embodiment, the acknowledgement of safe receipt is transmitted on an existing control channel associated with a carrier. In one embodiment, the encoding step comprises selection of a known codeword in response to receipt of the control message. Accordingly, the acknowledgement comprising additional coding may comprise a newly defined codeword in, for example, an HS-DPCCH, or a new physical channel. It may, however, be possible, in order to avoid having to redesign a new codeword or physical channel, to re-use existing codewords for the HS-DPCCH in an atypical context, such that they have a high likelihood of safe and accurate receipt at a base station.

Another example provides a network node operable to acknowledge receipt of a control message instructing a change in carrier configuration in a multi-carrier wireless telecommunication network, the multi-carrier wireless telecommunications network comprising a plurality of network nodes operable to simultaneously transmit and receive signals on more than one radio frequency carrier within a sector of the telecommunications network,
the network node comprising:
reception logic operable to receive the control message,
encoding logic operable to encode an acknowledgement of safe receipt of the control message comprising additional coding operable to reduce misinterpretation of the acknowledgement; and
transmission logic operable to transmit the acknowledgement of safe receipt.

In one embodiment, the network node comprises a base station. IN one embodiment, the network node comprises user equipment.

In one embodiment, the additional coding comprises additional redundancy.

In one embodiment, the additional coding comprises a check sum.

In one embodiment, the acknowledgement of safe receipt comprises a message of predetermined length.

In one embodiment, the transmission logic is further operable to transmit the acknowledgement of safe receipt, and a predetermined period after the transmission of the acknowledgement of safe receipt, re-transmitting the acknowledgement of safe receipt.

In one embodiment, the transmission logic is operable to perform the step of more than one repetition.

In one embodiment, the network node further comprises reconfiguration logic operable to reconfigure hardware in response to the instructed change in carrier configuration.

In one embodiment, the transmission logic is operable to perform the step of transmitting acknowledgement of safe receipt prior to said step of reconfiguring hardware and perform the step of re-transmitting said acknowledgement of safe receipt after the step of reconfiguring hardware.

In one embodiment, the transmission logic is operable to perform the step of transmitting said acknowledgement of safe receipt prior to the step of reconfiguring hardware and perform the step of re-transmitting the acknowledgement of safe receipt occurs during the step of reconfiguring hardware.

In one embodiment, the control message comprises an instruction to activate or deactivate one or more carriers in a multi-carrier wireless telecommunications network.

In one embodiment, the control message comprises an order to activate or deactivate reception of downlink carriers in a multi-carrier wireless telecommunications network.

In one embodiment, the transmission logic is operable to transmit the acknowledgement of safe receipt on an existing control channel associated with a carrier.

In one embodiment, the encoding logic is operable to select a known codeword in response to receipt of the control message.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 illustrates the main components of a telecommunications network according to one embodiment;
Figure 2a is a schematic illustration of a method of carrier reconfiguration of a multi-carrier network;
Figure 2b is a schematic illustration of a possible issue whilst the reconfiguring a multi-carrier network;
Figure 2c is a schematic illustration of a further possible issue when reconfiguring a multi-carrier network;
Figure 3 illustrates schematically one embodiment of channel reconfiguration according to one embodiment;
Figure 4 illustrates schematically a possible special acknowledgement format for use in one embodiment;
Figure 5 illustrates schematically a possible alternative special acknowledgement for use in one embodiment;
Figure 6 illustrates schematically a reconfiguration method according to one embodiment utilising a special acknowledgement; and
Figure 7 illustrates schematically a reconfiguration method according to a further embodiment utilising a special acknowledgement.

### DESCRIPTION OF THE EMBODIMENTS

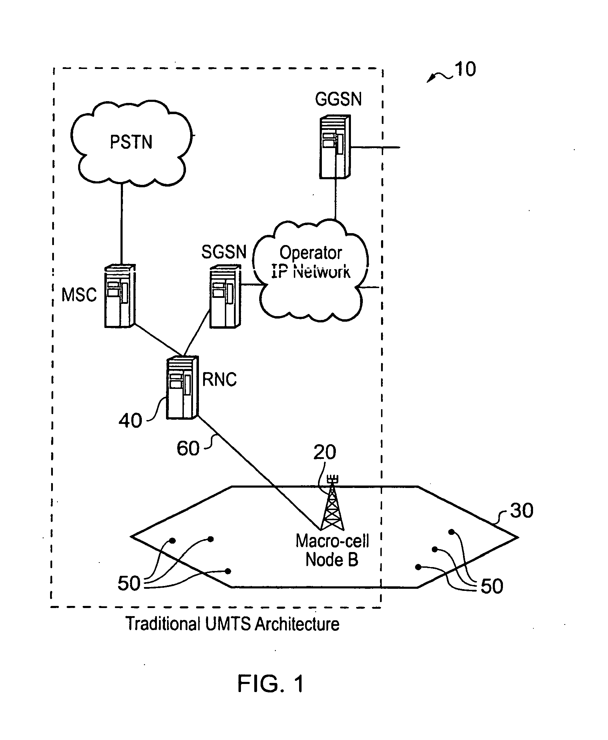

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Accordingly, each base station 20 has multiple antennae and signals sent through the different antennae, are electronically weighted to provide a sectorized approach. Of course it will be appreciated that Figure 1 illustrates a small subset of the total number of user equipment and base stations that may be present in a typical communication system.

The wireless communications system is managed by a Radio Network Controller (RNC) 40. The RNC 40 controls operation of the wireless communications system by communicating with a plurality of base stations over a backhaul communications link 60. The network controller also communicates with user equipment 50 via each base station and thus effectively manages the entire wireless communications system.

In a multi carrier system each sector served by a base station can have several carrier frequencies or "carriers" associated therewith. A carrier or cell supported by a carrier covers the same geographical region as a sector. Each cell is served by a different carrier frequency. It will therefore be understood that in a single carrier system the cell is equivalent to a sector since a sector has only one cell or carrier frequency. Nonetheless, in a multi carrier network each sector may comprise several cells, each cell being served simultaneously by a different carrier frequency.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the RNC 40, allocate a resource to user equipment in a manner that aims to optimise operation of the wireless telecommunications network 10. User equipment 50 can send data to a base station on one or more carriers known as "uplink carriers".

A base station in a multi-carrier system is operable to communicate and send data and information to user equipment on a set of down link carriers. In a multi carrier system, having either multi carrier uplink or multi carrier downlink, each carrier will have substantially independent downlink radio links from a base station to user equipment and vice versa. The downlink radio links are managed independently, since each carrier will likely have different radio publication paths to user equipment.

In a multi carrier system it has been agreed that one of the carriers will act as a so-called anchor or primary carrier. The anchor carrier functionally operates such that it is used as a basis upon which mobility events, handover, and other control

In one embodiment of a multi carrier system, known as 4 Carrier High Speed Downlink Packet Access Network (4C-HSDPA), a sector is defined as the geographical coverage area of a base station. The sector consists of several cells, in which each cell aims to cover the same geographical area as the sector. Each cell uses a separate frequency carrier for transmission. Each frequency carrier can be provided within the same frequency band or distributed over two frequency bands. 4C-HSDPA offers the possibility of user equipment being able to receive up to four simultaneous downlink transmissions from four different cells, from one base station. It can therefore be understood that 4C-HSDPA can potentially quadruple the downlink throughput of a single carrier network.

4C-HSDPA consists of one primary (or anchor) carrier and up to three secondary carriers. The secondary carriers are indexed as secondary carrier 1, secondary carrier 2, and secondary carrier 3. The primary carriers contains essential control channels and cannot be deactivated without causing disruption to communication between a user equipment and the base station. It will be understood that any one or more of the secondary downlink carriers can be deactivated by a base station without substantially disrupting communication and control between user equipment and a base station, and that as long as a primary uplink carrier remains in operation, one or more secondary uplink carriers, if provided, may be deactivated without disrupting communication between user equipment and a base station.

A base station is operable to deactivate or reactivate any one or more of the secondary downlink carriers using a High Speed Shared Control Channel (HS-SCCH) order. If sent, and successfully received, user equipment acknowledges receipt of an HS-SCCH order by using a feedback message which is sent to the base station on a High Speed Dedicated Physical Control Channel (HS-DPCCH) provided on an uplink carrier. That channel operates, in such a context, as a feedback channel.

The acknowledgement is sent as part of a message which also includes information regarding the downlink radio conditions being experienced by that user equipment for each currently activated carrier. The message includes information regarding Channel Quality Indicator (CQI) and Pre-coding Control Indication (PCI), and is typically of a fixed size, irrespective of how many downlink channels are in operation.

The message is sent from user equipment to a base station using a spreading factor of 128. Each symbol in the signal is multiplied by a code of length 128 symbols. The total number of symbols in the original signal is therefore increased by 128. Such coding practice increases the gain of the signal by a factor of 128. That is to say, the signal is 128 times "stronger" or requires 128 times less signal to noise ratio to be safely received.

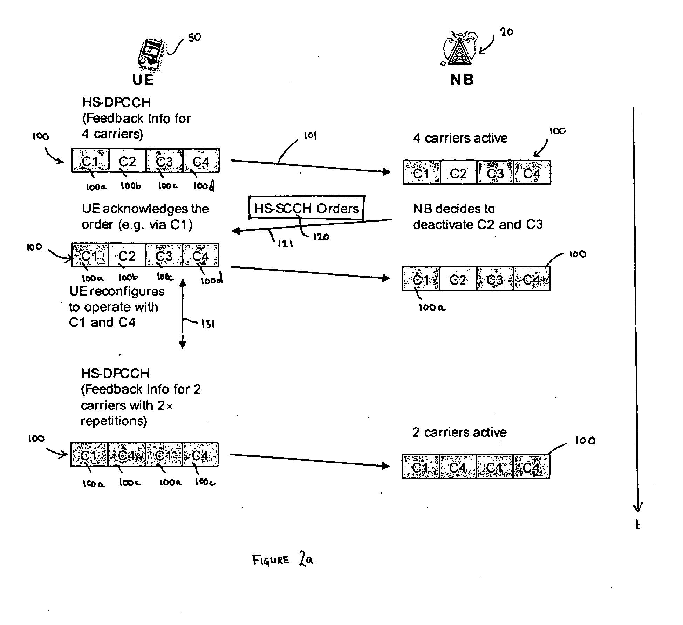

Figure 2a is a schematic illustration of a method of reconfiguring downlink carriers in a multi-carrier network. In particular, base station 20 is operating to communicate with user equipment 50. In this particular embodiment, a 4C-HSDPA network is schematically illustrated. That is to say, base station 20 provides for downlink carriers C1, C2, C3, C4 on which it communicates with user equipment 50. A time axis in Figure 2a runs vertically down the page.

In Figure 2a the base station and user equipment are initially operating using all four downlink carriers. Whilst operating normally, the user equipment sends feedback information 100 for each carrier 100A, 100B, 100C, 100D using an HS-DPCCH physical channel, using a spreading factor of 128. That feedback information 100 is sent (as indicated by arrow 101) to base station 20

In order to reconfigure downlink carrier configuration for user equipment 50, base station 20 sends (as indicated by arrow 121) an SC-SCCH order 120 to user equipment 50 instructing reconfiguration of the downlink carriers. In the example shown in Figure 2a, base station 20 decides to deactivate carriers C2 and C3 and sends HS-SCCH orders to that effect.

In the scenario shown in Figure 2a user equipment 50 acknowledges safe receipt of the HS-SCCH order by means of an acknowledgement sent as part of the information relating to carrier 1 (C1), ie the acknowledgement of receipt of the reconfiguration order is sent to base station 20 within information 100a.

User equipment 50, having successfully received the instruction to reconfigure, proceeds to reconfigure itself (indicated by arrow 131) to operate one of the two carriers, namely C 1 and C4, as requested by base station 20.

In this particular example, since only two carriers remain active, in reporting future feedback information regarding those carriers - that is to say, information regarding the downlink radio conditions on carriers 1 and 4, including CQI and PCI - the user equipment may repeat that feedback information 100a, 100c relating to C1 and C4 within the feedback information message 100.

Since the base station has received an acknowledgement from the user equipment and knows that the user equipment has successfully been able to reconfigure, it will also know that the new feedback information transmitted by the user equipment includes repetition and can operate to combines the feedback information 100a, 100c from the repetitions in message 100 to obtain processing gain.

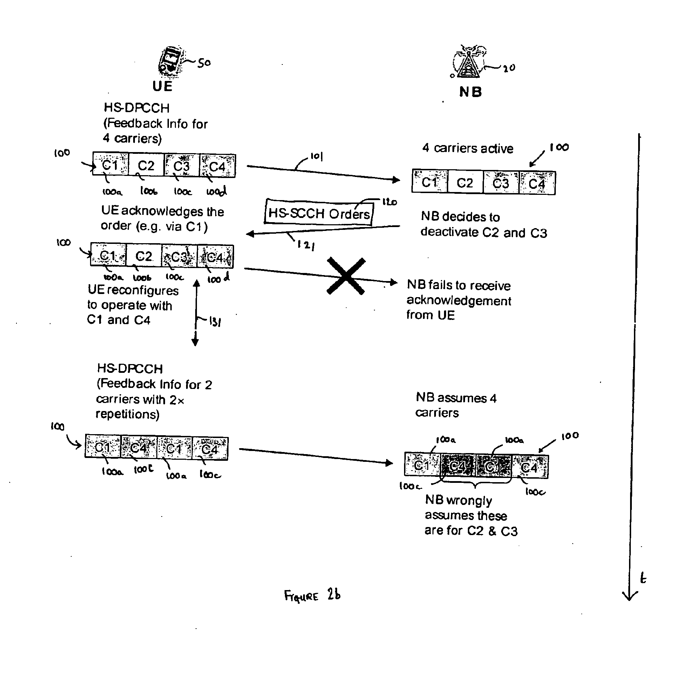

Figure 2b is a schematic illustration of a possible issue when reconfiguring a multi carrier network. The scenario illustrated is directly analogous to that illustrated in Figure 2a, in that the network comprises a 4C-HSDPA network in which the base station is initially using all four carriers and then decides to deactivate carrier 2 and carrier 3. Corresponding reference numerals have been re-used where appropriate.

In this case, although the user equipment successfully receives the order to reconfigure and reconfigures to operate only with C1 and C4, the acknowledgement sent by user equipment 50 to base station 20 is not successfully received by the base station.

The user equipment 50 proceeds to reconfigure 131 to operate the two carriers and acts to repeat the information 100a, 100c for the two active carriers when sending feedback information after reconfiguration. In this situation (where information is repeated within feedback message 100) the transmit power for HS-DPCCH transmissions is typically reduced by a factor of 2, ie reduced by 3 decibels, since the base station 20 can, if aware of the new format of the message, utilise coding gain to correctly interpret the messages from the repetition.

In the scenario illustrated in Figure 2b, the user equipment repeats the feedback information for the two remaining active carriers and sends it to the base station with 3 decibels less power. Since no acknowledgement is received by the base station, the base station assumes that the user equipment did not receive the order and that the information being sent by the user equipment relates to four carriers. The base station in this case fails to decode that the carriers which were deactivated by the user equipment (namely carrier 2 and carrier 3) are no longer being used by the user equipment. Although some of the feedback information 100a, 100c for carrier 1 and carrier 4 arrives in the same location within feedback message 100 as before carrier deactivation, it is possible that the base station may also fail to decode those feedback information messages, since they are now sent with 3 decibels less power and the base station cannot take advantage of the processing gain offered by repetition.

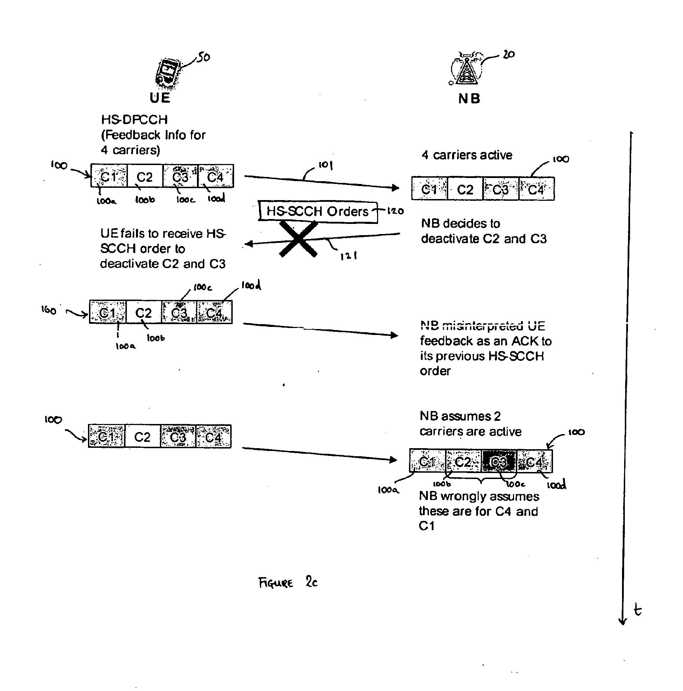

Figure 2c is a schematic illustration of a further possible issue when reconfiguring a multi carrier network. The scenario illustrated is directly analogous to that illustrated in Figures 2a and 2b, in that the network comprises a 4C-HSDPA network in which the base station is initially using all four carriers and then decides to deactivate carrier 2 and carrier 3. Corresponding reference numerals have been re-used where appropriate.

In the scenario shown in Figure 2c, the user equipment fails to receive the HS-SCCH order to deactivate carrier 2 and carrier 3. The base station, in the scenario illustrated, then wrongly misinterprets an HS-DPCCH message containing only usual feedback information from the user equipment as an acknowledgement of its previous order to reconfigure carrier configuration.

The user equipment continues to send feedback information relating to four carriers without any transmit power reduction. As shown schematically in Figure 2c, the base station 20 in this scenario is expecting the feedback to be a repetition of the two carriers which it believes to be activated. The base station therefore wrongly assumes feedback information 100b is actually 100c, and that feedback information 100c is a repetition of 100a. Although the feedback information is sent without a power reduction, the base station may try to combine that feedback information assuming a feedback message format repetition has been employed, thereby failing to decode any of the feedback information successfully.

It is desired to ensure that the process of sending feedback information (HS-DPCCH) in response to an HS-SCCH reconfiguration order is robust enough to minimise errors such as those illustrated schematically in Figures 2b and 2c.

It is possible, since the feedback information message 100 sent on the HS-DPCCH has no error check, to mitigate the chances of error 1 and error 2 by increasing the reliability of the feedback message sent on the HS-DPCCH being received at the base station 20.

One way of achieving increased reliability may be to program user equipment 50 such that if it does receive a reconfiguration order it automatically increases its transmission power on the HS-DPCCH. The increase in transmit power may be continued after receipt of an HS-SCCH order for several transmissions, or a predetermined period of time. Such an increase in power improves the probability that a base station will receive an acknowledgement sent in the HS-DPCCh feedback message 100, and thereby reduces the probability of the type of error shown in Figure 2b. However, such an increase in HS-DPCCH transmit power (or any transmit power) increases uplink interference which degrades uplink throughput. Such interference would be particularly significant if a base station decides to activate or deactivate secondary carriers for more than one user equipment, for example if it wishes to switch off one of its transmitters it may send such a reconfiguration order to deactivate a secondary carrier for all user equipment currently attached to that base station. Furthermore, for those user equipment operating at maximum transmit power, for example at a cell edge, if additional power is provided to the HS-DPCCH it will need to scale or reduce its power allocation for its primary data channel. That is to say, the channel responsible for uplink of user data. Reduction in power for its uplink data channel will degrade its uplink throughput.

Increasing transmit power for the feedback message 100 does not reduce the likelihood of the scenario set out in Figure 2c, in which the user equipment fails to receive the configuration change order in the first place.

It has been recognised that it may be possible to mitigate some of the errors shown in Figure 2b and 2c by utilising repetition steps spaced in time and/or by use of a special acknowledgement message.

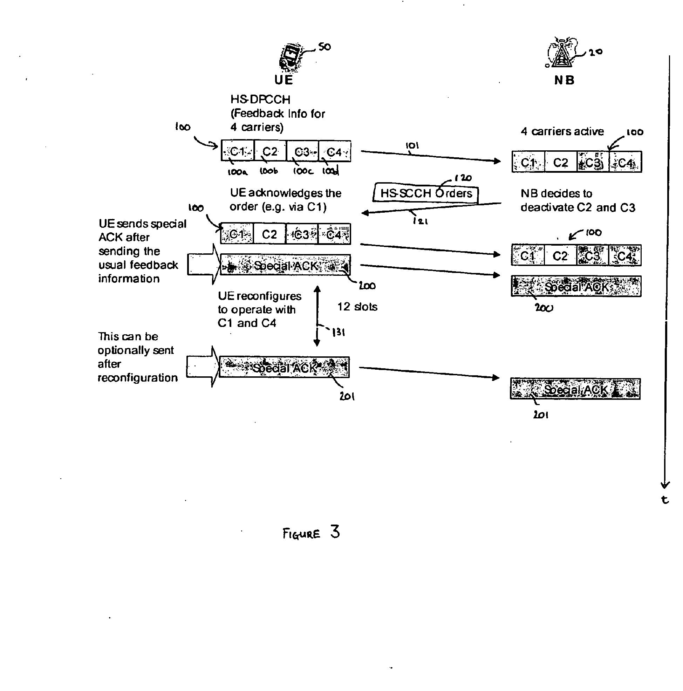

Figure 3 illustrates schematically one embodiment of channel reconfiguration according to one embodiment. The embodiment shown in Figure 3 utilises both repetition and a special form of acknowledgement message, but it will be appreciated that either repetition or a special form of acknowledgement message may equally be utilised an offer improvements and mitigation of the errors shown in Figures 2b and 2c without use of the other.

The scenario illustrated in Figure 3 is directly analogous to that illustrated in Figures 2a, 2b and 2c, in that the network comprises a 4C-HSDPA network in which the base station is initially using all four carriers and then decides to deactivate carrier 2 and carrier 3. Corresponding reference numerals have been re-used where appropriate.

According to the embodiment shown in Figure 3, when user equipment 50 receives a carrier reconfiguration order 120 (HS-SCCH order) to deactivate or activate some of the secondary carriers it will, as with the scenarios shown in Figures 2a-c, initially respond with a standard acknowledgement forming part of the feedback channel (HS-DPCCH). Assuming it has safely received the reconfiguration order, user equipment 50 then takes 12 slots to perform the reconfiguration 131.

During those 12 slots there are typically no HS-DPA packets sent from the base station to the user equipment. In the particular embodiment shown in Figure 3, the user equipment 50 operates, having received an HS-SCCH order (120) to sending a repeat of the reconfiguration order acknowledgement by using a special acknowledgement message 200. The special acknowledgement message can be sent after the usual feedback information on the usual feedback channel (HS-DPCCH). It will be appreciated that in some embodiments it can be sent instead of the usual feedback information.

The special acknowledgement 200 is typically chosen and can be better selected with high coding gain or to incorporate a check sum, thereby increasing the chance that the base station 20 will successfully recognise that an acknowledgement has been sent. Furthermore, a special acknowledgement can be sent again after user equipment reconfiguration, thereby further increasing the reliability of the reconfiguration request acknowledgement. That repeated transmission of the special acknowledgement message is represented as message 201 in Figure 3.

If the special acknowledgement is sent after usual feedback information, as shown in Figure 3, the base station gets two confirmations: once from usual feedback information and another from the special acknowledgement. Such an arrangement may delay user equipment reconfiguration, since two messages are sent from user equipment 50 before the reconfiguration process can commence. However, that delay is typically of the order of one sub-frame (three time slots) and may not be significant.

If a special acknowledgement is sent instead of the usual feedback information, the base station does not get the acknowledgement for data packets sent on other, secondary, carriers which are not used to send the reconfiguration order (ie does not receive feedback information 100a, 100b, 100c and 100d). The base station then also misses out on CQI and PCI information for each of carriers C1 to C4, but this is of less relevance since that data is not needed after user equipment reconfiguration for those carriers which are being deactivated. In that respect, a base station can stop sending data packets on secondary carriers when it sends the reconfiguration order 120 and hence, would not need acknowledgement and CQI and PCI information in respect of those deactivated secondary carriers.

It will be appreciated that it may be possible, depending on user equipment implementation, that the special acknowledgement may be sent within the 12 slot time period 131 usually allowed for reconfiguration. This is possible since, during carrier reconfiguration, the user equipment typically needs only to reconfigure its downlink reception configuration (the uplink transmission configuration may still be fully active). In such an arrangement, the special acknowledgement 200, or the usual feedback information 100, may be sent several times to increase the probability of the acknowledgement reaching a base station. In such a scenario, the base station may be programmed to expect the special acknowledgement, or repetitions of the usual feedback information, from user equipment during the reconfiguration period.

The special acknowledgement 200 may comprise a newly defined codeword for HS-DPCCH, or may comprise a new physical channel. It will be appreciated that to avoid having to redesign a new codeword or physical channel, existing codewords for HS-DPCCH may be used. For example it may be possible to re-use an existing codeword that would typically be used in a single carrier scenario or network since the special acknowledgement is performing only the task of acknowledging safe receipt of a carrier reconfiguration order from the base station.

In such a scenario, it will be appreciated that whilst the codeword is configured to include CQI and PCI information for a single carrier, the actual information is not important since it is a special acknowledgement, performing the task of acknowledging safe receipt of a reconfiguration order. As a result, the codeword may be chosen to have a CQI of 0. In such a scenario, since a spreading factor of 128 is typically used in a multi carrier arrangement, the single carrier codeword may be repeated twice to match the usual length of message used in a single carrier system, which uses a spreading factor of 256.

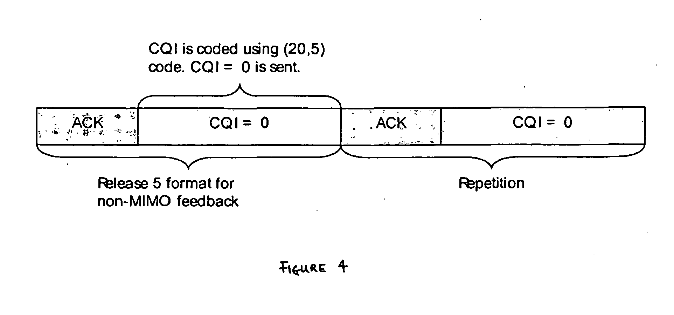

The format of one possible special acknowledgement is shown schematically in Figure 4. It will be appreciated that a base station expects such a format of message in response to a reconfiguration order when an embodiment of the present invention has been implemented. Furthermore, the base station does not expect any other form of acknowledgement, and an absence of such a special acknowledgement indicates that user equipment has failed to receive the carrier reconfiguration order.

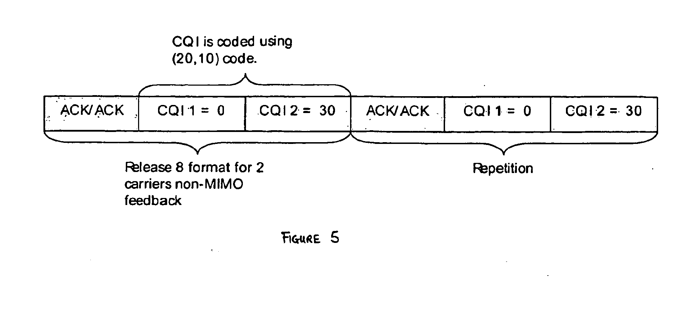

The codeword illustrated schematically in Figure 4 represents a valid feedback message 100 format when the user equipment has only one active downlink carrier. That is to say, when it is not operating in multiple input multiple output mode and utilises only the primary downlink carrier. Although such a codeword can be used in all situations, to avoid conflicting the codeword shown in Figure 4 with a valid codeword for one active carrier without multiple input multiple output, a codeword designed for more than two streams can be used. In such a scenario a base station would not expect user equipment with one active carrier to send feedback for two or more active carriers, and modifying the codeword thereby makes the codeword distinct. In such a scenario any of the feedback channel codewords for multiple carriers may be used - for example, it may be possible to use a release 8 HS-DPCCH codeword for carriers operating without MIMO. In such a scenario, a double acknowledgement may be used, followed by a CQI = 0 and a CQI = 30. Two extreme ends of CQI are used, since it is unlikely that one carrier is invalid whilst the other has the best possible radio condition. Since the codeword utilises only two carriers, it is repeated to fill available message length. Such an arrangement is shown schematically in Figure 5. It will be appreciated that any format of special acknowledgement may be used, but it must be consistent and known by both user equipment and base station for it to operate efficiently.

It will be appreciated that a special acknowledgement 200 works best if the message is coded such that it utilises a high coding gain or utilises a check sum, for example. Either method employs additional coding, and ensures that the acknowledgement message is received more reliably by a base station.

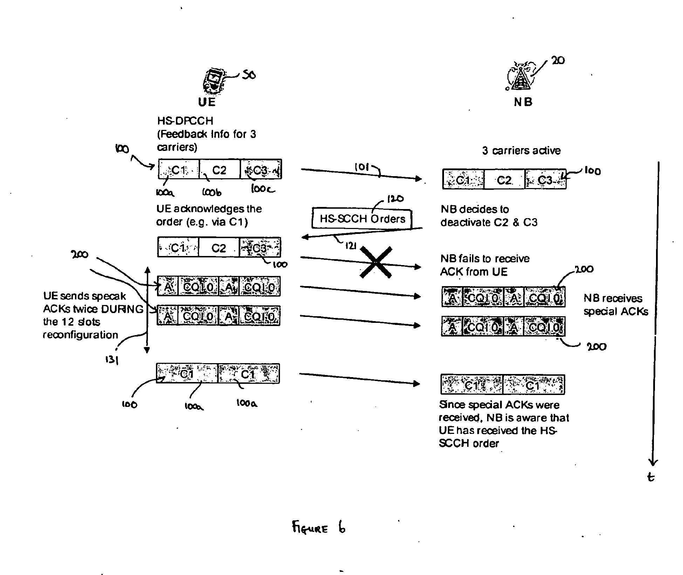

Figure 6 illustrates schematically a reconfiguration method according to one embodiment utilising a special acknowledgement. Such an arrangement illustrates how one embodiment may enable recovery from the type of error illustrated schematically in Figure 2b. Reference numerals have been re-used as appropriate.

In the scenario shown in Figure 6, the base station 20 initially operates with three active downlink carriers C1, C2, C3. The base station 20 decides to deactivate two secondary carriers (C2 and C3) and sends a reconfiguration order 120 which is received successfully by user equipment 50. The user equipment sends an acknowledgement to the base station 20 using the usual feedback mechanism 100. The base station, however, fails to receive that usual feedback information.

The user equipment 50 is configured such that when it receives a reconfiguration order from base station 20 it automatically sends a special acknowledgement. In particular, it is programmed to send two special acknowledgements 200 using a codeword such as that shown in Figure 4. The base station 20 expects a normal feedback but that message is not received. The base station also expects and receives two special acknowledgements and realises that the user equipment has, in fact, successfully received the reconfiguration order. In the scenario shown in Figure 6, the user equipment is operable to send special acknowledgements during the 12 slot reconfiguration period. After reconfiguration, the user equipment sends feedback information for one carrier, since the two secondary carriers C2 and C3 have been deactivated. The base station will thus be able to correctly decode the feedback information sent post-reconfiguration, since it has received two special acknowledgements 200 and knows that the user equipment has successfully received the reconfiguration order.

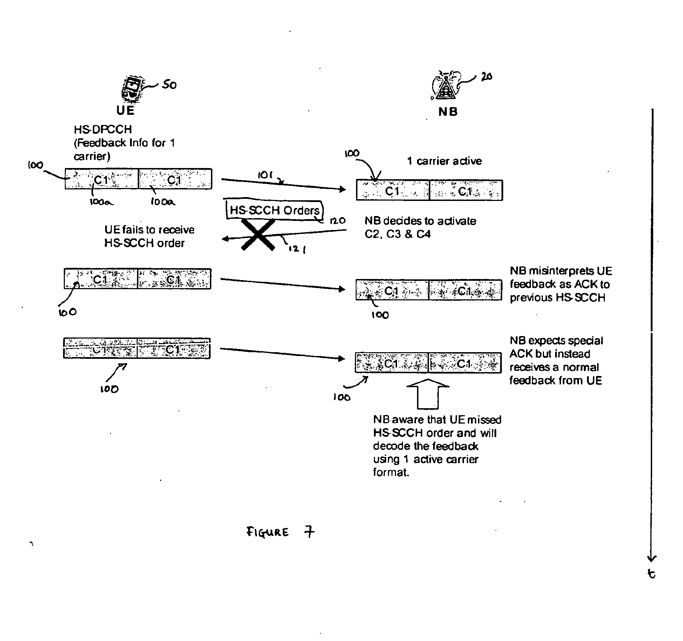

Figure 7 illustrates schematically a reconfiguration method according to a further embodiment utilising a special acknowledgement. In the scenario shown in Figure 7, it can be seen how recovery from the type of error described in relation to Figure 2c may be enabled. In the scenario illustrated in Figure 7, the base station 20 initially operates using only one active carrier C 1. The base station 20 decides to activate three secondary carriers (C2, C3 and C4). The base station sends a reconfiguration order 120 to user equipment 50. However, the user equipment 50 fails to receive the order 120 and continues sending the usual feedbacks 100 relating to only the one active carrier of which it is aware (C1), to the base station 50. In the scenario shown in Figure 2c the base station could misunderstand the feedback sent by user equipment as an acknowledgement to the reconfiguration order. In this case, the base station expects two or more special acknowledgements but instead continues to receive normal feedback messages 100 from the user equipment. As a result, the base station 20 realises that the user equipment 50 has not received the reconfiguration order 120 and continues to decode the feedback being sent by user equipment using the previous format (having one active carrier). Furthermore, having realised that the user equipment 50 has not received the reconfiguration order 120, the base station 20 may re-send the reconfiguration order 120 to activate C2, C3 and C4 (step not shown in Figure 7).

It will be appreciated that embodiments of the present invention revolve around increasing the probability of successfully receiving feedback information and, in particular, an acknowledgement of the reconfiguration order. In particular, in each case it is possible to resend the feedback with higher protection, for example by specially coding the acknowledgement, or to increase the likelihood that a feedback message is successfully received, that message may be repeated a number of times.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of acknowledging receipt of a control message (120) instructing a change in carrier configuration in a multi-carrier wireless telecommunication network (10), said multi-carrier wireless telecommunications network (10) comprising a plurality of network nodes (20; 50) configured to simultaneously transmit and receive signals on more than one radio frequency carrier within a sector of said telecommunications network (10),
said method comprising the steps of:
receiving said control message (120),
encoding an acknowledgement of safe receipt (100) of said control message (120),
transmitting said acknowledgement of safe receipt, and **characterized by** a predetermined period after said transmission of said acknowledgement of safe receipt (100), re-transmitting said acknowledgement of safe receipt.

2. A method according to claim 1, further comprising the step of more than one retransmission.

3. A method according to claim 1 or claim 2, further comprising the steps of reconfiguring (131) hardware in response to the instructed change in carrier configuration (120).

4. A method according to claim 3, wherein said step of transmitting said acknowledgement of safe receipt (100), occurs prior to said step of reconfiguring hardware (131) and said step of re-transmitting said acknowledgement of safe receipt (100) occurs after said step of reconfiguring hardware (131).

5. A method according to claim 3, wherein said step of transmitting said acknowledgement of safe receipt (100), occurs prior to said step of reconfiguring hardware (131) and said step of re-transmitting said acknowledgement of safe receipt (100) occurs during said step of reconfiguring hardware (131).

6. A method according to any preceding claim, wherein said step of encoding an acknowledgement of safe receipt (100) of said control message (120) comprises encoding an acknowledgement of safe receipt comprising additional coding (200) operable to reduce misinterpretation of said acknowledgement.

7. A method according to claim 6, wherein said additional coding (200) comprises additional redundancy.

8. A method according to claim 6 or claim 7, wherein said additional coding (200) comprises a check sum.

9. A method according to any preceding claim wherein said acknowledgement of safe receipt (100) comprises a message of predetermined length.

10. A method according to any preceding claim, wherein said control message (120) comprises an instruction to activate or deactivate one or more carriers in a multi-carrier wireless telecommunications network.

11. A method according to claim 10, wherein said control message (120) comprises an order to activate or deactivate reception of downlink carriers in a multi-carrier wireless telecommunications network.

12. A method according to any preceding claim, wherein said acknowledgement of safe receipt (100) is transmitted on an existing control channel associated with a carrier.

13. A method according to any preceding claim, wherein said encoding step comprises selection of a known codeword in response to receipt of said control message.

14. A computer program product configured, when executed on a computer, to perform the method of any one of claims 1 to 13.

15. A network node (20; 50) operable to acknowledge receipt of a control message (120) instructing a change in carrier configuration in a multi-carrier wireless telecommunication network (10), said multi-carrier wireless telecommunications network comprising a plurality of network nodes (20; 50) configured to simultaneously transmit and receive signals on more than one radio frequency carrier within a sector of said telecommunications network (10),
said network node (20; 50) comprising:
reception logic configured to receive said control message (120),
encoding logic configured to encode an acknowledgement of safe receipt (100) of said control message (120), and
transmission logic configured to transmit said acknowledgement of safe receipt (100), and **characterized in that** said transmission logic is further configured to a predetermined period after said transmission of said acknowledgement of safe receipt (100), re-transmit said acknowledgement of safe receipt (100).

## Patentansprüche

1. Verfahren zur Bestätigung des Empfangs einer Steuernachricht (120), welche eine Änderung der Trägerkonfiguration in einem drahtlosen Mehrträger-Telekommunikationsnetzwerk (10) anordnet, wobei das besagte drahtlose Mehrträger-Telekommunikationsnetzwerk (10) eine Vielzahl von Netzwerkknoten (20; 50) umfasst, welche für das simultane Übertragen und Empfangen von Signalen auf mehr als einem Funkfrequenzträger innerhalb eines Abschnitts des besagten Telekommunikationsnetzwerks (10) konfiguriert sind,
wobei das besagte Verfahren die folgenden Schritte umfasst:
Empfangen der besagten Steuernachricht (120),
Codieren einer Bestätigung des sicheren Empfangs (100) der besagten Steuernachricht (120),
Übertragen der besagten Bestätigung des sicheren Empfangs, und **gekennzeichnet durch** das erneute Übertragen der besagten Bestätigung des sicheren Empfangs nach Ablauf eines vorbestimmten Zeitraums nach der besagten Übertragung der besagten Bestätigung des sicheren Empfangs (100).

2. Verfahren nach Anspruch 1, weiterhin umfassend den Schritt des Durchführens von mehr als einer erneuten Übertragung.

3. Verfahren nach Anspruch 1 oder Anspruch 2, weiterhin umfassend den Schritt des Rekonfigurierens (131) der Hardware in Reaktion auf die angeordnete Änderung der Trägerkonfiguration (120).

4. Verfahren nach Anspruch 3, wobei der besagte Schritt des Übertragens der besagten Bestätigung des sicheren Empfangs (100) vor dem besagten Schritt des Rekonfigurierens (131) der Hardware erfolgt, und der besagte Schritt des erneuten Übertragens der besagten Bestätigung des sicheren Empfangs (100) nach dem Schritt des Rekonfigurierens (131) der Hardware erfolgt.

5. Verfahren nach Anspruch 3, wobei der besagte Schritt des Übertragens der besagten Bestätigung des sicheren Empfangs (100) vor dem besagten Schritt des Rekonfigurierens (131) der Hardware erfolgt, und der besagte Schritt des erneuten Übertragens der besagten Bestätigung des sicheren Empfangs (100) während des besagten Schritts des Rekonfigurierens (131) der Hardware erfolgt.

6. Verfahren nach einem beliebigen der vorstehenden Ansprüche, wobei der besagte Schritt des Codierens einer Bestätigung des sicheren Empfangs (100) der besagten Steuernachricht (120) das Codieren einer Bestätigung des sicheren Empfangs mit einer zusätzlichen Codierung (200) umfasst, um eine Fehldeutung der besagten Bestätigung zu reduzieren.

7. Verfahren nach Anspruch 6, wobei die besagte zusätzliche Codierung (200) eine zusätzliche Redundanz umfasst.

8. Verfahren nach Anspruch 6 oder Anspruch 7, wobei die besagte zusätzliche Codierung (200) eine Prüfsumme umfasst.

9. Verfahren nach einem beliebigen der vorstehenden Ansprüche, wobei die besagte Bestätigung des sicheren Empfangs (100) eine Nachricht mit vorbestimmter Länge umfasst.

10. Verfahren nach einem beliebigen der vorstehenden Ansprüche, wobei die besagte Steuernachricht (120) eine Anordnung der Aktvierung oder Deaktivierung eines oder mehrerer Träger in einem drahtlosen Mehrträger-Telekommunikationsnetzwerk enthält.

11. Verfahren nach Anspruch 10, wobei die besagte Steuernachricht (120) einen Befehl zum Aktivieren oder Deaktivieren des Empfangs von Downlink-Trägern in einem drahtlosen Mehrträger-Telekommunikationsnetzwerk enthält.

12. Verfahren nach einem beliebigen der vorstehenden Ansprüche, wobei die besagte Bestätigung des sicheren Empfangs (100) auf einem bestehenden, mit dem Träger assoziierten Steuerkanal übertragen wird.

13. Verfahren nach einem beliebigen der vorstehenden Ansprüche, wobei der besagte Schritt des Codierens das Auswählen eines bekannten Codeworts in Reaktion auf den Empfang der besagten Steuernachricht umfasst.

14. Computerprogramm-Produkt, welches dafür konfiguriert ist, bei dessen Ausführung auf einem Computer das Verfahren nach einem beliebigen der Ansprüche 1 bis 13 durchzuführen.

15. Netzwerkknoten (20; 50), betreibbar für das Bestätigen des Empfangs einer Steuernachricht (120), welche eine Änderung der Trägerfunktion in einem drahtlosen Mehrträger-Telekommunikationsnetzwerk (10) anordnet, wobei das besagte drahtlose Mehrträger-Telekommunikationsnetzwerk eine Vielzahl von Netzwerkknoten (20; 50) umfasst, welche dafür konfiguriert sind, Signale simultan auf mehr als einem Funkfrequenzträger innerhalb eines Abschnitts des besagten Telekommunikationsnetzwerks (10) zu übertragen und zu empfangen,
wobei der besagte Netzwerkknoten (20; 50) umfasst:
Empfangslogik, konfiguriert für den Empfang der besagten Steuernachricht (120).
Codierlogik, konfiguriert für die Codierung einer Bestätigung des sicheren Empfangs (100) der besagten Steuernachricht (120), und
Übertragungslogik, konfiguriert für die Übertragung der besagten Bestätigung des sicheren Empfangs (100), und **dadurch gekennzeichnet, dass** die besagte Übertragungslogik weiterhin dafür konfiguriert ist, die besagte Bestätigung des sicheren Empfangs (100) nach Ablauf eines vorbestimmten Zeitraums nach der besagten Übertragung der besagten Bestätigung des sicheren Empfangs (100) erneut zu übertragen.

## Revendications

1. Procédé d'accusé de réception d'un message de commande (120) ordonnant une modification de configuration de porteuse dans un réseau de télécommunication sans fil de multi-porteuses (10), ledit réseau de télécommunication sans fil de multi-porteuses (10) comprenant une pluralité de noeuds de réseau (20 ; 50) configurés pour émettre et recevoir simultanément des signaux sur plus d'une porteuse radioélectrique dans un secteur dudit réseau de télécommunication (10),
ledit procédé comprenant les étapes suivantes :
recevoir ledit message de commande (120),
coder un accusé de bonne réception (100) dudit message de commande (120),
transmettre ledit accusé de bonne réception, et **caractérisé par** une période prédéterminée après ladite transmission dudit accusé de bonne réception (100), retransmettre ledit accusé de bonne réception.

2. Procédé selon la revendication 1, comprenant en outre l'étape de plus d'une retransmission.

3. Procédé selon la revendication 1 ou la revendication 2, comprenant en outre les étapes de reconfiguration (131) du matériel en réponse à la modification ordonnée de configuration de porteuse (120).

4. Procédé selon la revendication 3, dans lequel ladite étape de transmission dudit accusé de bonne réception (100) se produit avant ladite étape de reconfiguration du matériel (131) et ladite étape de retransmission dudit accusé de bonne réception (100) se produit après ladite étape de reconfiguration du matériel (131).

5. Procédé selon la revendication 3, dans lequel ladite étape de transmission dudit accusé de bonne réception (100) se produit avant ladite étape de reconfiguration du matériel (131) et ladite étape de retransmission dudit accusé de bonne réception (100) se produit durant ladite étape de reconfiguration du matériel (131).

6. Procédé selon l'une quelconque des revendications précédentes, dans lequel ladite étape de codage d'un accusé de bonne réception (100) dudit message de commande (120) comprend le codage d'un accusé de bonne réception comprenant un codage supplémentaire (200) permettant de réduire la mauvaise interprétation dudit accusé de réception.

7. Procédé selon la revendication 6, dans lequel ledit codage supplémentaire (200) comprend une redondance supplémentaire.

8. Procédé selon la revendication 6 ou la revendication 7, dans lequel ledit codage supplémentaire (200) comprend une somme de contrôle.

9. Procédé selon l'une quelconque des revendications précédentes dans lequel ledit accusé de bonne réception (100) comprend un message de longueur prédéterminée.

10. Procédé selon l'une quelconque des revendications précédentes, dans lequel ledit message de commande (120) comprend un ordre d'activation ou de désactivation d'une ou de plusieurs porteuses dans un réseau de télécommunication sans fil de multi-porteuses.

11. Procédé selon la revendication 10, dans lequel ledit message de commande (120) comprend un ordre d'activation ou de désactivation de la réception de porteuses de liaison descendante dans un réseau de télécommunication sans fil de multi-porteuses.

12. Procédé selon l'une quelconque des revendications précédentes, dans lequel ledit accusé de bonne réception (100) est transmis sur un canal de commande existant associé à une porteuse.

13. Procédé selon l'une quelconque des revendications précédentes, dans lequel ladite étape de codage comprend la sélection d'un mot codé connu en réponse à la réception dudit message de commande.

14. Produit de programme informatique configuré, lorsqu'il est exécuté dans un ordinateur, pour exécuter le procédé selon l'une quelconque des revendications 1 à 13.

15. Noeud de réseau (20 ; 50) permettant d'accuser réception d'un message de commande (120) ordonnant une modification de configuration de porteuse dans un réseau de télécommunication sans fil de multi-porteuses (10), ledit réseau de télécommunication sans fil de multi-porteuses comprenant une pluralité de noeuds de réseau (20 ; 50) configurés pour émettre et recevoir simultanément des signaux sur plus d'une porteuse radioélectrique dans un secteur dudit réseau de télécommunication (10),
ledit noeud de réseau (20 ; 50) comprenant :
une logique de réception configurée pour recevoir ledit message de commande (120),
une logique de codage configurée pour coder un accusé de bonne réception (100) dudit message de commande (120), et
une logique de transmission configurée pour transmettre ledit accusé de bonne réception (100), et **caractérisée en ce que** ladite logique de transmission est en outre configurée sur une période prédéterminée après ladite transmission dudit accusé de bonne réception (100), pour retransmettre ledit accusé de bonne réception (100).
